# EUROPEAN PATENT APPLICATION

(11) **EP 4 819 261 A1**
(43) Date of publication of application: **07.10.2026**
(21) Application number: 24897057.6
(22) Date of filing: 25.09.2024
(51) Int. Cl.: H01M 8/18, H01M 8/02, H01M 8/1018, H01M 8/1058, H01M 8/106, H01M 8/1062

(54) **BATTERY CELL AND REDOX FLOW BATTERY SYSTEM**

(30) Priority: 01.12.2023 JP 2023203975
(71) Applicant: Sumitomo Electric Industries, Ltd., Osaka-shi, Osaka 541-0041 (JP)
(72) Inventor: OYA, Masayuki, Osaka-shi, Osaka 541-0041 (JP); KAWAGOE, Yoshiyasu, Osaka-shi, Osaka 541-0041 (JP); MORIUCHI, Kiyoaki, Osaka-shi, Osaka 541-0041 (JP)
(74) Representative: Müller-Boré & Partner Patentanwälte PartG mbB
(86) International application number: PCT/JP2024/034047
(87) International publication number: WO 2025/115367

(57) **Abstract**

A battery cell according to the present disclosure comprises a positive electrode, a negative electrode, a diaphragm, and a porous body. The porous body is disposed either one between the positive electrode and the diaphragm or between the negative electrode and the diaphragm, or each one between the positive electrode and the diaphragm and between the negative electrode and the diaphragm. The porous body includes a porous substrate made of an insulating material, and a coating part formed on at least a portion of the substrate. The coating part includes at least one of a cation exchange material and an anion exchange material.

## Description

### TECHNICAL FIELD

The present disclosure relates to a battery cell and a redox flow battery system. This application claims priority based on Japanese Patent Application No. 2023-203975 filed on December 1, 2023, the entire contents of which are incorporated herein by reference.

### BACKGROUND ART

Patent literature 1 discloses a redox flow battery system as one of storage batteries. The redox flow battery system includes a battery cell. The battery cell includes a positive electrode cell and a negative electrode cell which are separated by a membrane. In the redox flow battery system, charging or discharging is performed by circulating a positive electrolyte in a positive electrode cell and circulating a negative electrolyte in a negative electrode cell. These electrolytes include active material ions that charging or discharging by changing their valences.

During the operation of the redox flow battery system, active material ions may move from the positive electrode cell to the negative electrode cell or from the negative electrode cell to the positive electrode cell. The movement of the active material ions changes the balance between the concentration of the positive electrode active material ions in the positive electrolyte and the concentration of the negative electrode active material ions in the negative electrolyte, and causes a decrease in the battery characteristics of the redox flow battery system. In the redox flow battery system of patent literature 1, the positive electrolyte and the negative electrolyte are mixed to correct the change in the balance.

### CITATION LIST

### PATENT LITERATURE

Patent literature 1: Japanese Unexamined Patent Application Publication No. 2020-187939

### SUMMARY OF INVENTION

A battery cell of the present disclosure includes a positive electrode, a negative electrode, a membrane, and a porous body. The porous body is disposed between the positive electrode and the membrane, the porous body is disposed between the negative electrode and the membrane, or the porous bodies are respectively disposed between the positive electrode and the membrane and between the negative electrode and the membrane. The porous body includes a porous base made of an insulating material and a covered portion formed on at least a part of the base. The covered portion includes at least one of a cation exchange material or an anion exchange material.

### BRIEF DESCRIPTION OF THE DRAWINGS

[FIG. 1] FIG. 1 is a schematic configuration diagram of a redox flow battery system including a battery cell according to an embodiment.
[FIG. 2] FIG. 2 is a schematic diagram schematically showing an arrangement state of each member in a battery cell.
[FIG. 3] FIG. 3 is a schematic diagram schematically showing an arrangement state of each member in a battery cell different from that in FIG. 2.
[FIG. 4] FIG. 4 is a partially enlarged view of a porous body provided in a battery cell according to an embodiment.
[FIG. 5] FIG. 5 is a partially enlarged view of an electrode provided in a battery cell according to an embodiment.

### DETAILED DESCRIPTION

When the positive electrolyte and the negative electrolyte are mixed in the battery cell, a part of the stored electric power is wasted due to self-discharging. Thus, there is a need to reduce the active material ions that move from the positive electrode cell to the negative electrode cell or from the negative electrode cell to the positive electrode cell, that is, a need to reduce the active material ions that permeate through the membrane. Furthermore, there is a need to reduce the frequency of mixing the positive electrolyte and the negative electrolyte.

One of the objects of the present disclosure is to provide a battery cell and a redox flow battery system capable of reducing active material ions permeating through a membrane.

A battery cell of the present disclosure can reduce the active material ions permeating through the membrane.

First, embodiments of the present disclosure will be listed and described. In this specification, a positive electrode and a negative electrode may be simply referred to as an "electrode" without distinction. A cation exchange material and an anion exchange material may be simply referred to as an "ion exchange material" without distinction.

<1> A battery cell according to an aspect of the present disclosure includes a positive electrode, a negative electrode, a membrane, and a porous body. The porous body is disposed between the positive electrode and the membrane, the porous body is disposed between the negative electrode and the membrane, or the porous bodies are respectively disposed between the positive electrode and the membrane and between the negative electrode and the membrane. The porous body includes a porous base made of an insulating material and a covered portion formed on at least a part of the base. The covered portion includes at least one of a cation exchange material or an anion exchange material.

The membrane has proton permeability. That is, ions for maintaining electrical neutrality as a battery, typically protons, permeate through the membrane. The cation exchange material is a material that has a property of selectively exchanging a specific cation. The anion exchange material is a material that has a property of selectively exchanging a specific anion.

The porous body containing the ion exchange material is disposed between the membrane and the electrode, and thus the amount of active material ions permeating through the membrane can be reduced. For example, when the porous body is disposed between the membrane and the negative electrode, the negative electrode active material ions are less likely to reach the membrane, and thus, is less likely to move to the positive electrolyte. The reason for this is considered to be that the ion exchange material makes the active material ions less likely to move.

When the active material ions permeating through the membrane are reduced, the current efficiency of the redox flow battery system including the battery cell is likely to be improved. In addition, the frequency of mixing the positive electrolyte and the negative electrolyte can be reduced. Thus, the electric power stored in the redox flow battery system is less likely to be wasted. Thus, in the battery cell of the present disclosure, current efficiency is improved.

The base has a skeleton of a three dimensional network structure. The covered portion is formed on at least a part of the surface of the skeleton. The porous body is provided with a plurality of pores. Since the electrolyte can pass through the pores of the porous body, the flow of the electrolyte in the battery cell is less likely to be impeded. Thus, even when the porous body is disposed, the cell resistivity of the battery cell is less likely to increase.

When the porous body is disposed, the electrode and the membrane are less likely to come into contact with each other, and the membrane is less likely to be damaged. For example, even when the electrode is formed of a fiber aggregate having a plurality of carbon fibers, the carbon fibers are less likely to pierce the membrane and the membrane is less likely to be damaged as long as the porous body is disposed between the electrode and the membrane.

<2> In the battery cell according to the above <1>, the porous bodies may be respectively disposed between the positive electrode and the membrane and between the negative electrode and the membrane.

When the porous bodies are respectively disposed between the positive electrode and the membrane and between the negative electrode and the membrane, the current efficiency of the battery cell is further improved, and the membranes are less likely to be damaged.

<3> In the battery cell according to the above <1>, the porous body may be disposed only between the negative electrode and the membrane.

The negative electrode active material ion may be more permeable through the membrane than the positive electrode active material ion. For example, in a vanadium redox flow battery system, divalent vanadium ions are likely to permeate through the membrane. When the porous body is disposed between the negative electrode and the membrane, the negative electrode active material ions are less likely to reach the membrane, and thus, the negative electrode active material ions are less likely to move to the positive electrolyte.

When the porous body is disposed only between the negative electrode and the membrane, the cell resistivity of the battery cell is less likely to increase even when the porous body is disposed. In addition, the number of components of the battery cell can be reduced as much as possible.

<4> In the battery cell according to any one of the above <1> to <3>, the anion exchange material may be one or more materials selected from the group consisting of a material containing a primary to tertiary amino group, a material containing a quaternary ammonium group, and a material containing a heterocyclic molecule having nitrogen.

These anion exchange materials reduce the amount of active material ions that permeate through the membrane.

<5> In the battery cell according to any one of the above <1> to <4>, the covered portion may include both the cation exchange material and the anion exchange material.

When the covered portion includes both the cation exchange material and the anion exchange material, the active material ions permeating through the membrane are further reduced. Thus, the current efficiency of the redox flow battery system including the battery cell is more likely to be improved.

<6> In the battery cell according to any one of the above <1> to <4>, the covered portion may include no cation exchange material and may include just the anion exchange material.

Even when the ion exchange material contained in the covered portion is just an anion exchange material, the active material ions permeating through the membrane are reduced, and the current efficiency of the redox flow battery system including the battery cell is likely to be improved.

<7> In the battery cell according to any one of the above <1> to <5>, the cation exchange material may be one or more materials selected from the group consisting of a material containing a sulfonic acid group, a material containing a carboxylic acid group, and a material containing a phosphoric acid group.

The cation exchange material reduces the amount of active material ions that permeate though the membrane.

<8> In the battery cell according to any one of the above <1> to <7>, at least one of the cation exchange material or the anion exchange material may include a hydrocarbon-based ion exchange material.

The hydrocarbon-based ion exchange material reduces the amount of active material ions that permeate through the membrane.

<9> In the battery cell according to any one of the above <1> to <8>, the insulating material may be polyethylene, polypropylene, an ethylene-α-olefin copolymer, a vinyl copolymer resin, an engineering plastic, a super engineering resin, or a halogen-containing resin.

The base made of the insulating material has excellent flexibility, and thus the membrane is less likely to be damaged even when the porous body comes into contact with the membrane.

<10> In the battery cell according to any one of the above <1> to <9>, the membrane may have a thickness of 60 µm or less.

When the thickness of the membrane is 60 µm (micrometers) or less, protons are likely to permeate through the membrane. Thus, when the membrane has proton permeability, the resistivity of the battery cell is likely to be reduced. The thinner the membrane, the easier the active material ions permeate through the membrane. In the battery cell of the present disclosure, even when the membrane is thin, the amount of active material ions permeating through the membrane can be reduced by the porous body, and thus the current efficiency of the redox flow battery system is less likely to decrease.

<11> In the battery cell according to the above <10>, the membrane may have a thickness of 5 µm or more.

The membrane having a thickness of 5 µm or more is less likely to be damaged.

<12> In the battery cell according to any one of the above <1> to <11>, the base may include a plurality of resin fibers. The resin fibers may have an average diameter of 0.1 µm to 20 µm.

The resin fibers having an average diameter of 0.1 µm or more is less likely to pierce the membrane. The resin fibers having an average diameter of 20 µm or less is less likely to be caught by the membrane. Thus, in the battery cell of the present disclosure, even when the porous body comes into contact with the membrane, the membrane is less likely to be damaged. Thus, the positive electrolyte and the negative electrolyte are less likely to be mixed, and the battery is less likely to be short-circuited.

<13> In the battery cell according to any one of the above <1> to <12>, a porosity of the base may be 60% to 99%.

The porous body containing the base having a porosity of 60% or more is less likely to impede the flow of the electrolyte in the battery cell. Thus, even when the porous body is disposed, the cell resistivity of the battery cell is less likely to increase. The base having a porosity of 99% or less has excellent mechanical strength. Thus, even when the porous body is compressed between the membrane and the electrode, the membrane and the electrode are less likely to come into contact with each other.

<14> In the battery cell according to any one of the above <1> to <13>, a basis weight of the base may be 2 g/m² to 40 g/m².

In a porous body containing a base having a basis weight of 2 g/m² or more, the electrode and the membrane are less likely to come into contact with each other, and the membrane is less likely to be damaged. A porous body containing a base having a basis weight of 40 g/m² or less is less likely to impede the flow of the electrolyte in the battery cell.

<15> In the battery cell according to any one of the above <1> to <14>, the porous body may have a thickness of 0.5 µm to 200 µm.

In a porous body having a thickness of 0.5 µm or more, the electrode and the membrane are less likely to come into contact with each other, and thus the membrane is less likely to be damaged. In a porous body having a thickness of 200 µm or less, the cell resistivity of the battery cell is less likely to increase, and the flow of the electrolyte in the battery cell is less likely to be impeded.

<16> In the battery cell according to any one of the above <1> to <15>, at least one of the positive electrode or the negative electrode may be a fiber aggregate having a plurality of carbon fibers. The fiber aggregate may be a nonwoven fabric, a woven fabric, or a paper.

The carbon fibers have excellent electrical conductivity and excellent resistance to the electrolyte.

<17> A redox flow battery system according to an aspect of the present disclosure includes the battery cell according to any one of the above <1> to <16>, a first circulation mechanism configured to circulate a positive electrolyte through the battery cell, and a second circulation mechanism configured to circulate a negative electrolyte through the battery cell. The positive electrolyte contains vanadium ions as positive active materials. The negative electrolyte contains vanadium ions as negative active materials.

The redox flow battery system of the present disclosure includes the battery cell, and thus current efficiency is improved. According to the redox flow battery system of the present disclosure, the frequency of mixing the positive electrolyte and the negative electrolyte can be reduced.

### <Details of Embodiment of Present Disclosure>

Hereinafter, specific examples of a battery cell and a redox flow battery system according to an embodiment of the present disclosure will be described with reference to the drawings. In the embodiment, the redox flow battery is referred to as an RF battery. The same reference numerals in the drawings denote the same or corresponding parts. The sizes of the members shown in the drawings are expressed for the purpose of clarifying the description, and do not necessarily represent the actual sizes. The present invention is not limited to these examples, but is defined by the scope of the claims, and is intended to include all modifications within the meaning and scope equivalent to the scope of the claims.

### <Embodiment>

### [RF Battery System]

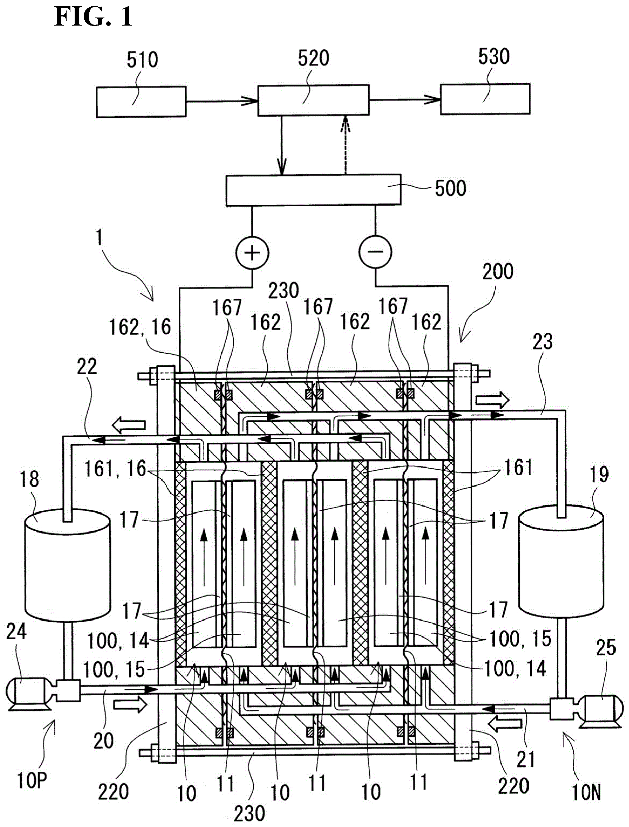

An RF battery system 1 shown in FIG. 1 includes a battery cell 10, a first circulation mechanism 10P, and a second circulation mechanism 10N. The battery cell 10 includes a positive electrode 14, a negative electrode 15, a membrane 11, and a porous body 17. The membrane 11 is disposed between the positive electrode 14 and the negative electrode 15. The first circulation mechanism 10P and the second circulation mechanism 10N circulate electrolytes through the battery cell 10. One of the features of the RF battery system 1 is that the porous body 17 is disposed between the positive electrode 14 and the membrane 11, disposed between the negative electrode 15 and the membrane 11, or the porous bodies 17 are respectively disposed between the positive electrode 14 and the membrane 11 and between the negative electrode 15 and the membrane 11. In FIG. 1, the porous bodies 17 are respectively disposed between the positive electrode 14 and the membrane 11 and between the negative electrode 15 and the membrane 11.

### [Overview of RF Battery System]

The RF battery system 1 shown in FIG. 1 charges or discharges electric power. Charged electric power is electric power generated by a power generation unit 510. Discharged electric power is supplied to a load 530. The power generation unit 510 is, for example, a solar photovoltaic power generator, a wind power generator, or other power generators provided in a general power plant. The load 530 is, for example, a consumer of electric power. Typically, the RF battery system 1 is connected to an alternating current/direct current converter 500, the alternating current/direct current converter 500 is connected to a transformer facility 520, and the transformer facility 520 is connected to the power generation unit 510 and the load 530. In FIG. 1, a solid line arrow between the alternating current/direct current converter 500 and the transformer facility 520 indicates charging, and a dashed line arrow indicates discharging. The RF battery system 1 is used for, for example, load leveling, instantaneous voltage drop compensation, or output smoothing for natural energy power generation. Examples of the natural energy power generation include solar power generation and wind power generation, which are being introduced in large quantities. The RF battery system 1 can also be used as an emergency power supply. The RF battery system 1 uses a positive electrolyte and a negative electrolyte. The positive electrolyte and the negative electrolyte typically contain, as an active material ion, a metal ion whose valence is changed by oxidation and reduction. The charging and discharging of the RF battery system 1 is performed by using a difference between an oxidation-reduction potential of an active material ion included in the positive electrolyte and an oxidation-reduction potential of an active material ion included in the negative electrolyte.

### [Basic Configuration of RF Battery]

The RF battery system 1 includes the battery cell 10. The battery cell 10 includes a positive electrode cell and a negative electrode cell. The positive electrode cell and the negative electrode cell are separated by the membrane 11 described later.

The positive electrode 14, which will be described later, is included in the positive electrode cell. The positive electrolyte is circulated through the positive electrode cell by the first circulation mechanism 10P. The first circulation mechanism 10P includes a positive electrolyte tank 18, a supply pipe 20, a discharge pipe 22, and a pump 24. The positive electrolyte tank 18 stores the positive electrolyte. The positive electrolyte flows through the supply pipe 20 and the discharge pipe 22. The supply pipe 20 connects the positive electrolyte tank 18 and the positive electrode cell. The discharge pipe 22 connects the positive electrode cell and the positive electrolyte tank 18. The pump 24 pumps the positive electrolyte in the positive electrolyte tank 18. The pump 24 is provided midway along the supply pipe 20.

The negative electrode 15, which will be described later, is included in the negative electrode cell. The negative electrolyte is circulated through the negative electrode cell by the second circulation mechanism 10N. The second circulation mechanism 10N includes a negative electrolyte tank 19, a supply pipe 21, a discharge pipe 23, and a pump 25. The negative electrolyte tank 19 stores the negative electrolyte. The negative electrolyte flows through the supply pipe 21 and the discharge pipe 23. The supply pipe 21 connects the negative electrolyte tank 19 and the negative electrode cell. The discharge pipe 23 connects the negative electrode cell and the negative electrolyte tank 19. The pump 25 pumps the negative electrolyte in the negative electrolyte tank 19. The pump 25 is provided midway along the supply pipe 21.

During the operation of the RF battery system 1, the positive electrolyte and the negative electrolyte pumped by the pump 24 and the pump 25 flow as follows. The positive electrolyte flows through the supply pipe 20 and is supplied from the positive electrolyte tank 18 to the positive electrode cell. The positive electrolyte flows through the discharge pipe 22 and is discharged from the positive electrode cell to the positive electrolyte tank 18. The negative electrolyte flows through the supply pipe 21 and is supplied from the negative electrolyte tank 19 to the negative electrode cell. The negative electrolyte flows through the discharge pipe 23 and is discharged from the negative electrode cell to the negative electrolyte tank 19. During standby periods when no charging or discharging occurs, the pump 24 and the pump 25 are stopped, and neither the positive electrolyte nor the negative electrolyte flows.

The battery cell 10 is usually provided inside a cell stack 200. The cell stack 200 includes a layered body in which a plurality of battery cells 10 are stacked, two end plates 220, and a fastening mechanism 230. In the layered body of the present embodiment, a cell frame 16, the positive electrode 14, the porous body 17, the membrane 11, the porous body 17, and the negative electrode 15 are stacked in this order. The two end plates 220 sandwich the layered body from the outside. The fastening mechanism 230 fastens both end plates 220. The cell stack 200 may include a plurality of sub-cell stacks. The main body of each of the sub-cell stacks is the layered body.

The cell frame 16 includes a bipolar plate 161 and a frame body 162. The cell frame 16 has a recessed portion in which the positive electrode 14 or the negative electrode 15 is disposed. The recessed portion is formed by the surface of the bipolar plate 161 and the inner periphery surface of the frame body 162. One battery cell 10 is disposed between the bipolar plates 161 of two adjacent cell frames 16. One bipolar plate 161 is disposed between the positive electrode cell and the negative electrode cell of the adjacent battery cell 10. The bipolar plate 161 and the frame body 162 may have known configurations. A ring-shaped sealing member 167 is disposed between the frame body 162 and the frame body 162. The sealing member 167 prevents electrolyte leakage from the battery cell 10.

The positive electrode active material ion contained in the positive electrolyte is, for example, one or more selected from the group consisting of vanadium ion, manganese ion, iron ion, polyacids, quinone derivatives, amines, organic compounds, and organometallic complexes. The negative electrode active material ion contained in the negative electrolyte is, for example, one or more selected from the group consisting of vanadium ion, titanium ion, chromium ion, polyacids, quinone derivatives, amines, and organometallic complexes. Charging and discharging are performed in accordance with the valence change reaction of the active material ions. A solvent for the electrolyte is, for example, an aqueous solution containing one or more acids selected from the group consisting of sulfuric acid, phosphoric acid, nitric acid, and hydrochloric acid or acid salts thereof.

When the positive electrode active material ions and the negative electrode active material ion are vanadium (V) ions, the V ions constituting the positive electrode active material ions are V⁴⁺ and V⁵⁺. During charging, V⁴⁺ is oxidized to V⁵⁺. During discharge, V⁵⁺ is reduced to V⁴⁺. The negative active materials are V²⁺ and V³⁺. During charging, V³⁺ is reduced to V²⁺. During discharge, V²⁺ is oxidized to V³⁺. The membrane 11 has proton permeability. In addition to the protons permeating through the membrane 11, metal ions, such as V ions which are cations, may permeate through the membrane 11. When the membrane 11 has proton permeability, V²⁺ is more likely to permeate through the membrane 11 than V ions other than V²⁺. When the positive electrode active material ions move to the negative electrolyte through the membrane 11 or when the negative electrode active material ions move to the positive electrolyte through the membrane 11, a difference in the amount of active material ions in the positive electrolyte and the negative electrolyte may occur. Thus, the battery capacity may decrease.

Since the RF battery system 1 includes the porous body 17, the active material ions are less likely to move between the positive electrolyte and the negative electrolyte. Hereinafter, the RF battery system 1, mainly the porous body 17, will be described.

### [Porous Body]

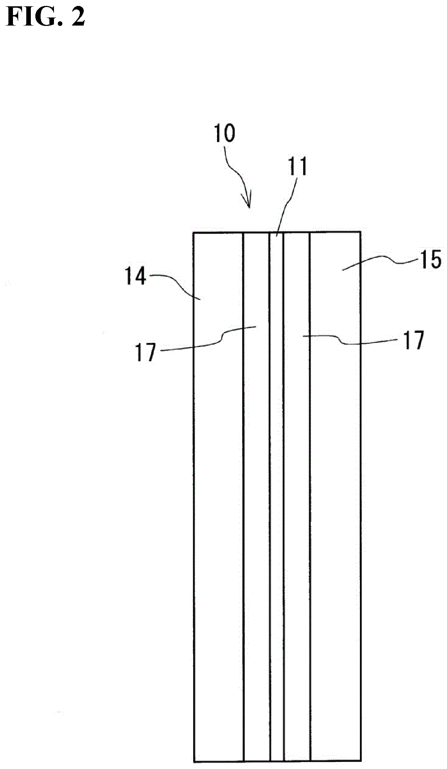

As shown in FIG. 2, in the battery cell 10, the positive electrode 14, the porous body 17, the membrane 11, the porous body 17, and the negative electrode 15 are arranged in this order so as to be in contact with each other. The porous body 17 reduces the amount of active material ions that permeate through the membrane 11. Specifically, the porous body 17 disposed in the negative electrode cell reduces the amount of negative electrode active material ions that permeate through the membrane 11 and move from the negative electrode cell toward the positive electrode cell. The porous body 17 disposed in the positive electrode cell reduces the amount of positive electrode active material ions that permeate through the membrane 11 and move from the positive electrode cell toward the negative electrode cell. It is considered that such effects are brought about by the porous body 17.

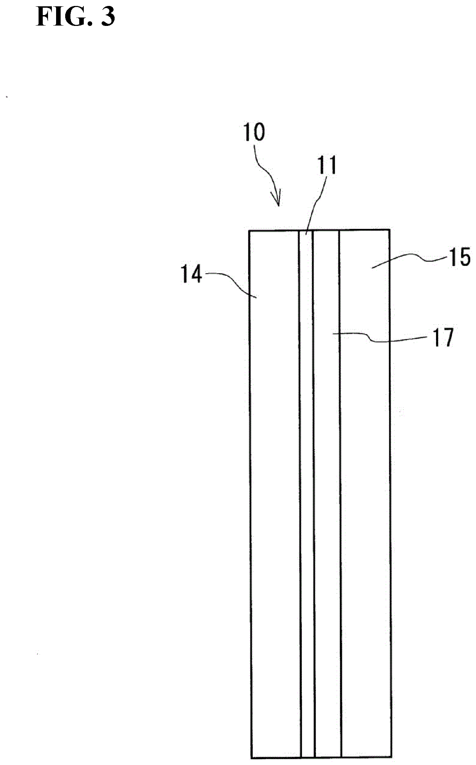

As shown in FIG. 3, the porous body 17 may be disposed only between the membrane 11 and the negative electrode 15. For example, when the positive electrode active material ions and the negative electrode active material ions are V ions, the negative electrode active material ions are more likely to permeate through the membrane 11 than the positive electrode active material ions. The porous body 17 may be disposed only in the negative electrode cell, and the porous body 17 does not have to be disposed in the positive electrode cell. In the following description, the positive electrode 14 and the negative electrode 15 may be simply referred to as an "electrode 100" without distinction.

The porous body 17 is a member independent of the electrode 100. An example of the planar shape of the porous body 17 is a rectangle. The term "planar shape" means that the contour shape of a first surface or a second surface of the porous body 17 when the first surface or the second surface is viewed in a plan view. The first surface is a surface facing the electrode 100. The second surface is a surface facing the membrane 11. The rectangle here includes a square. The meaning of the "rectangle" is the same as that of the planar shape of the electrode 100 and the planar shape of the membrane 11.

When the porous body 17 is disposed, the electrode 100 is less likely to come into contact with the membrane 11. When the electrode 100 and the membrane 11 are less likely to come into contact with each other, the membrane 11 is less likely to be damaged. Thus, the positive electrolyte and the negative electrolyte are less likely to be mixed, and the battery is less likely to be short-circuited. Thus, high current efficiency is maintained.

A thickness of the porous body 17 is, for example, 0.1 µm to 200 µm. The thickness of the porous body 17 is a thickness of the porous body 17 in a compressed state. The porous body 17 having a thickness of 0.1 µm or more can reduce the active material ions permeating through the membrane 11, and can reduce damage of the membrane 11 due to contact between the electrode 100 and the membrane 11. The porous body 17 having a thickness of 200 µm or less is less likely to impede the flow of the electrolyte in the battery cell 10. The thickness of the porous body 17 may be 5 µm to 200 µm, 30 µm to 200 µm, or 50 µm to 150 µm.

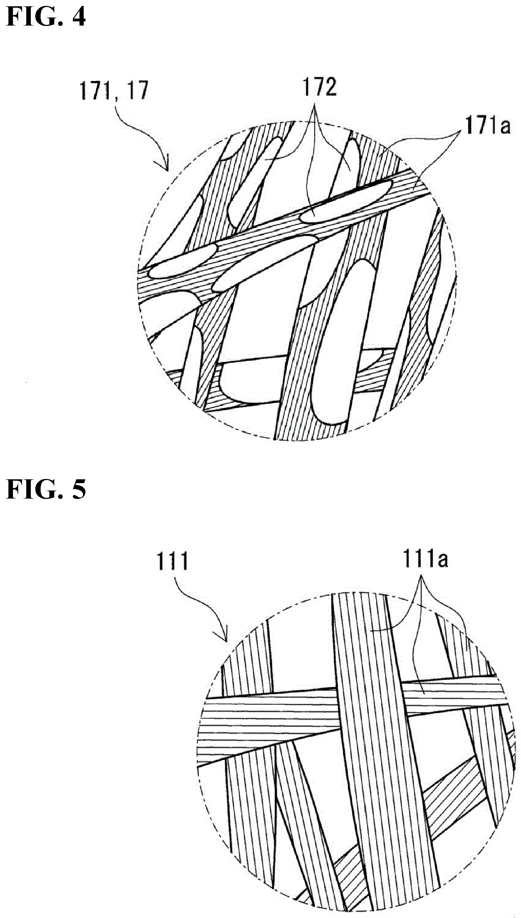

As shown in FIG. 4, the porous body 17 includes a porous base 171 made of an insulating material, for example, an insulating resin, and a covered portion 172 formed on at least a part of the base 171.

### (Base)

The base 171 is made of an insulating material. The base 171 is provided with a plurality of pores through which an electrolyte can flow. The base 171 is, for example, a fiber aggregate containing resin fibers, a resin foam, or a resin mesh member. The fiber aggregate is, for example, a nonwoven fabric or a woven fabric. In the nonwoven fabric, individual resin fibers are entangled. In the woven fabric, a warp and a weft of resin fibers are alternately woven. The resin is, for example, polyethylene, polypropylene, an ethylene-α-olefin copolymer, a vinyl copolymer resin, an engineering plastic, a super engineering resin, or a halogen-containing resin. The engineering plastic or super engineering resin is, for example, polyphenylene sulfide (PPS) or polystyrene. The halogen-containing resin is, for example, polytetrafluoroethylene, polyvinyl chloride, or polyvinylidene fluoride. These resins have excellent resistance to the electrolyte, and thus the base 171 is less likely to be damaged. The material of the base 171 can be identified by specifying the molecular structure using at least one analysis method of infrared absorption spectroscopy, Raman spectroscopy, pyrolysis gas chromatograph mass spectrometry, time-of-flight secondary ion mass spectrometry, or nuclear magnetic resonance analysis.

The base 171 is made of a fiber aggregate including a plurality of resin fibers 171a. The base 171 is provided with a plurality of pores formed by being surrounded by the resin fibers 171a. The larger the average diameter of the resin fibers 171a is, the more likely the porous body 17 can be formed, which is less likely to impede the flow of the electrolyte in the battery cell 10. The average diameter of the resin fibers 171a is, for example, 0.1 µm or more. The average diameter of the resin fibers 171a may be 0.5 µm or more, 1 µm or more, 2 µm or more, or 5 µm or more.

The average diameter of the resin fibers 171a is, for example, 20 µm or less. The smaller the average diameter of the resin fibers 171a is, the less likely the membrane 11 is to be damaged even when the porous body 17 comes into contact with the membrane 11. Since the resin fibers 171a having an average diameter of 20 µm or less have low rigidity, the membrane 11 is less likely to be damaged even when the porous body 17 comes into contact with the membrane 11. The average diameter of the resin fibers 171a may be 18 µm or less, or 15 µm or less.

The average diameter of the resin fibers 171a may be 0.1 µm to 20 µm, 0.5 µm to 18 µm, or 1 µm to 15 µm.

The resin fibers 171a constituting the base 171 may be softer than carbon fibers 111a constituting the electrode 100 (see FIG. 5). The base 171 formed of the resin fibers 171a has excellent flexibility. Thus, even when the porous body 17 comes into contact with the membrane 11, the membrane 11 is less likely to be damaged.

The average diameter of the resin fibers 171a is obtained as follows. The porous body 17 is cut to expose the cross-section of the resin fiber 171a. The porous body 17 is cut along a plane perpendicular to a surface of the porous body 17 facing the electrode. The cross-section is magnified with a microscope. The magnification is, for example, 1000 times. For five or more resin fibers 171a, the diameter of each resin fiber 171a is obtained. The diameter is a diameter of a circle having the same area as the area of the cross-section of the resin fiber 171a. The average of all the diameters obtained is the average diameter of the resin fibers 171a.

The base 171 may be made of an insulating material other than resin. The insulating material other than resin is, for example, an inorganic material such as ceramics and glass. The base 171 may be a nonwoven fabric including ceramic fibers or glass fibers.

A porosity of the base 171 is, for example, 60% to 99%. The porosity of the base 171 in this specification is the porosity of the uncompressed base 171. In the porous body 17 formed of the base 171 having a porosity of 60% or more, the flow of the electrolyte in the battery cell 10 is less likely to be impeded. Thus, the cell resistivity of the battery cell 10 in which the porous body 17 is disposed is less likely to increase. The base 171 having a porosity of 99% or less has excellent mechanical strength. Thus, even when the porous body 17 is compressed between the membrane 11 and the electrode 100, the membrane 11 and the electrode 100 are less likely to come into contact with each other. The porosity of the base 171 may be 70% to 95%, or 75% to 90%. The porosity of the porous body 17 may be equal to or less than the porosity of the electrode 100, or may be more than the porosity of the electrode 100. When the porosity of the base 171 is equal to or less than the porosity of the electrode 100, the electrode 100 is less likely to come into contact with the membrane 11, and the membrane 11 is less likely to be damaged due to the porous body 17 being disposed. Even when the porosity of the base 171 is larger than the porosity of the electrode 100, the electrode 100 is less likely to come into contact with the membrane 11 and the membrane 11 is less likely to be damaged as long as the thickness of the porous body 17 is sufficient.

After removing the covered portion 172 from the base 171 using a detergent, the porosity of the base 171 can be obtained by measuring the volume, mass, and true density of the base 171. The true density of the base 171 is obtained by specifying the material of the base 171. The porosity of the base 171 forming the porous body 17 is often substantially the same as the porosity of the base 171 prepared in the production process.

A basis weight of the base 171 is, for example, 2 g/m² to 40 g/m². The base 171 having a basis weight of 2 g/m² or more can hold an appropriate amount of the covered portion 172. Thus, the active material ions that permeate through the membrane 11 are reduced, and the damage of the membrane 11 due to the contact between the electrode 100 and the membrane 11 is reduced. In the porous body 17 formed of the base 171 having a basis weight of 40 g/m² or less, the cell resistivity of the battery cell 10 is less likely to increase, and the flow of the electrolyte in the battery cell 10 is less likely to be impeded. The basis weight of base 171 may be 5 g/m² to 40 g/m², 8 g/m² to 35 g/m²,or 10 g/m² to 30 g/m².

### (Covered Portion)

The covered portion 172 is formed to cover at least a part of the surface of the skeleton of the base 171. When the covered portion 172 is formed, the volume of the pores of the base 171 may be reduced. The covered portion 172 may have pores formed therein so that the electrolyte can flow through the porous body 17. As long as the electrolyte can flow through the porous body 17, the porous body 17 may include pores closed by the covered portion 172.

The covered portion 172 is formed on at least a part of a surface of the resin fiber 171a. The covered portion 172 may be formed on the entire surface of the resin fiber 171a. In this case, the resin fiber 171a is coated with the covered portion 172.

The covered portion 172 includes an ion exchange material. Ion exchange materials include an anion exchange material and a cation exchange material. The covered portion 172 may include a single ion exchange material or may include a plurality of different ion exchange materials. The covered portion 172 may include no cation exchange material and may include just an anion exchange material. The covered portion 172 may include no anion exchange material and may include just a cation exchange material. The covered portion 172 may include both an anion exchange material and a cation exchange material. When the active material ions are cations such as metal ions, the covered portion 172 may include an anion exchange material or a cation exchange material having excellent ion selectivity. The cation exchange material having excellent ion selectivity selects ions for maintaining electrical neutrality as a battery, for example, protons as an exchange target, and does not select the active material ion. Thus, protons permeate through the porous body 17 containing the cation exchange material having excellent ion selectivity, and the active material ions are less likely to permeate through the porous body 17 containing the cation exchange material having excellent ion selectivity.

The anion exchange material is, for example, a material containing a primary to tertiary amino group, a material containing a quaternary ammonium group, or a material containing a heterocyclic molecule having nitrogen. When the covered portion 172 includes a plurality of anion exchange materials, the covered portion 172 may include one or more materials selected from the group consisting of the three materials described above. The material containing the primary to tertiary amino group is, for example, polyethylenimine or a salt thereof, polyaniline or a salt thereof, polyallylamine or a salt thereof, polystyrene-based tertiary amine, or polyphenol-based tertiary amine. The material containing the quaternary ammonium group is, for example, a diallyldimethylammonium chloride polymer, diallylamine hydrochloride/sulfur dioxide copolymer, tetrabutylammonium, benzyltriethylammonium, polystyrene-based quaternary ammonium, or benzethonium. The material containing a heterocyclic molecule having nitrogen atoms is, for example, polypyrrole or a salt thereof, diallylamine polymer or a salt thereof, poly(4-vinylpyridine) or a salt thereof, vinylpyridine/divinyl benzene copolymer or a salt thereof, vinylpyridine/styrene copolymer or a salt thereof, polybenzimidazole or a salt thereof, poly(diallyldimethylammonium) or a salt thereof, or cetylpyridinium. The anion exchange material may include a hydrocarbon-based ion exchange material. The anion exchange material may be a known anion exchange resin other than the above.

The cation exchange material is, for example, a material containing a sulfonic acid group, a material containing a carboxylic acid group, or a material containing a phosphoric acid group. When the covered portion 172 includes a plurality of cation exchange materials, the covered portion 172 may include one or more materials selected from the group consisting of the three materials described above. The material containing a sulfonic acid group is, for example, a sulfonated polymer, a perfluorocarbonsulfonic acid resin, a polystyrene sulfonic acid resin, sulfonated polyether sulfone, sulfonated polyetheretherketone, sulfonated polyimide, sulfonated polyether, sulfonated polybenzimidazole, or sulfonated polyarylene. The material containing a carboxylic acid group is, for example, a methacrylic weakly acidic cation exchange resin or an acrylic weakly acidic cation exchange resin. The material containing a phosphoric acid group is, for example, a phosphoric acid ester polymer or polyphosphoric acid. The cation exchange material may include a hydrocarbon-based ion exchange material.

When the ion exchange material is at least one selected from the group consisting of the anion exchange materials and the cation exchange materials described above, the amount of active material ions permeating through the membrane 11 in the battery cell 10 can be reduced.

The mass of the covered portion 172 is obtained by subtracting the mass of the base 171 from the mass of the manufactured porous body 17.

The method of forming the covered portion 172 is, for example, the following forming method. A raw material solution containing an ion exchange material is prepared. The raw material solution is applied to the base 171, or the base 171 is immersed in the raw material solution. The amount of the ion exchange material contained in the raw material solution is adjusted so that the proportion of the covered portion 172 in the porous body 17 becomes appropriate. The ion exchange material contained in the raw material solution may be in the form of particles dispersed in the raw material solution or may be dissolved in the raw material solution. The raw material solution may contain a crosslinking agent. Depending on the type of the raw material solution, the base 171 may be subjected to a pretreatment. The pretreatment is, for example, corona treatment, plasma treatment, or ozone treatment. The pretreatment may improve the adhesion between the base 171 and the covered portion 172. The base 171 in which the raw material solution adhering to the surface of the resin fiber 171a is dried to evaporate the liquid component of the raw material solution, thereby forming the covered portion 172. The drying may be performed in an atmosphere at a temperature equal to or lower than the melting point of the resin fiber 171a. When the crosslinking agent is contained in the raw material solution, the ion exchange material is crosslinked by performing a treatment for crosslinking, for example, a heat treatment. When the ion exchange material is crosslinked, the covered portion 172 becomes less likely to peel off from the surface of the resin fiber 171a.

### [Positive Electrode and Negative Electrode]

The configuration of the positive electrode 14 may be the same as or different from the configuration of the negative electrode 15. An example of the planar shape of the electrode 100 is a rectangle.

The electrode 100 is made of a porous material. In the present embodiment, the porous material is a fiber aggregate 111 as shown in FIG. 5. The fiber aggregate 111 includes a plurality of carbon fibers 111a. The carbon fiber 111a has electrical conductivity. In the fiber aggregate 111, it is easy to increase the number of contact points between the carbon fibers 111a. Thus, the electrical conductivity of the electrode 100 formed of the fiber aggregate 111 is likely to be improved. In the fiber aggregate 111, pores are likely to be formed. Thus, in the electrode 100 formed of the fiber aggregate 111, the flowability of an electrolyte is likely to be improved. The form of the fiber aggregate 111 is, for example, a nonwoven fabric, a woven fabric, or paper. In the nonwoven fabric, the individual carbon fibers 111a are entangled. In the woven fabric, a warp and a weft of the carbon fiber 111a are alternately woven. The paper is, for example, a carbon paper having the plurality of carbon fibers 111a and a binder for binding the carbon fibers 111a. Nonwoven fabrics include felt, spunlace, and marifleece. A known carbon fiber can be used as the carbon fiber 111a.

### [Membrane]

The membrane 11 is disposed between the positive electrode 14 and the negative electrode 15. The membrane 11 separates the positive electrode cell and the negative electrode cell. The membrane 11 has proton permeability, that is, hydrogen ion permeability. A known membrane can be used as the membrane 11. An example of the planar shape of the membrane 11 is a rectangle.

A thickness of the membrane 11 is, for example, 60 µm or less. The membrane 11 having a thickness of 60 µm or less is likely to reduce the cell resistivity. The reason for this is that such the membrane 11 is likely to allow hydrogen ions to permeate therethrough. The thickness of the membrane 11 may be 40 µm or less, or 30 µm or less. The lower limit of the thickness of the membrane 11 is, for example, 5 µm. The membrane 11 having a thickness of 5 µm or more is less likely to be damaged. The thickness of the membrane 11 may be 8 µm or more, or 10 µm or more. The thickness of the membrane 11 is, for example, 5 µm to 60 µm, 8 µm to 40 µm, or 10 µm to 30 µm.

### <Test Example>

In the test example, the influence of the porous body on the battery performance of the RF battery system 1 was examined. Specifically, single-cell batteries each including single positive electrode 14 and single negative electrode 15 were prepared, and the cell resistivity and current efficiency of each single-cell battery were measured.

### <<Sample No. 1 to Sample No. 12>>

In each of the single-cell batteries of sample No. 1 to sample No. 12, the first cell frame 16, the positive electrode 14, the porous body 17, the membrane 11, the porous body 17, the negative electrode 15, and the second cell frame 16 were stacked in this order so as to be in contact with each other. In these samples, the porous body 17 was disposed in each of the positive electrode cell and the negative electrode cell. That is, the porous body 17 was disposed between the positive electrode 14 and the membrane 11 and between the negative electrode 15 and the membrane 11, respectively. The main configuration of the battery cell 10 is as follows.
- Membrane 11: membrane having proton permeability made of perfluorocarbonsulfonic acid resin
- Thickness of the membrane 11: 20 µm
- Thickness of the uncompressed porous body 17: 80 µm
- Base 171: nonwoven fabric made of PPS resin
- Porosity of the uncompressed base 171: 81%
- Basis weight of the base 171: 20 g/m²
- Method of forming the covered portion 172: application method of applying a raw material solution containing an ion exchange material to the base 171 and then drying them
- Material of the covered portion 172: shown in Table 1
The term "both electrodes" in Table 1 means that the porous body 17 was disposed in each of the positive electrode cell and the negative electrode cell, that is, respectively between the positive electrode 14 and the membrane 11 and between the negative electrode 15 and the membrane 11. The term "negative electrode" means that the porous body 17 was disposed only in the negative electrode cell, that is, only between the negative electrode 15 and the membrane 11. In Table 1, the term "pC-type" means an anion exchange material, and the term "pA-type" means a cation exchange material. The term "poly(sodium 4-styrenesulfonate)" in sample No. 6 is a kind of polystyrene sulfonic acid resin. In addition, the symbol "+" means that a plurality of types of ion exchange materials were sequentially formed. For example, the term "poly(diallyldimethylammonium) + perfluorocarbonsulfonic acid resin" means that the covered portion 172 was formed by applying the perfluorocarbonsulfonic acid resin after applying poly(diallyldimethylammonium) to the base 171.

### <<Sample No. 13>>

In the single-cell battery of sample No. 13, the first cell frame 16, the positive electrode 14, the membrane 11, the porous body 17, the negative electrode 15, and the second cell frame 16 were stacked in this order so as to be in contact with each other. In the single-cell battery of sample No. 13, the porous body 17 was disposed only in the negative electrode cell. That is, the porous body 17 was disposed only between the negative electrode 15 and the membrane 11. The configuration of the single-cell battery of sample No. 13 was the same as the configuration of the single-cell battery of sample No. 2 except that the porous body 17 was disposed only in the negative electrode cell.

### <<Sample No. 101>>

In the single-cell battery of sample No. 101, the porous bodies without the covered portion 172 were respectively disposed in the positive electrode cell and the negative electrode cell. That is, the porous bodies without the covered portion 172 were respectively disposed between the positive electrode 14 and the membrane 11 and between the negative electrode 15 and the membrane 11. The porous body without the covered portion 172 is a porous body consisting of only the base 171. The configuration of the single-cell battery of sample No. 101 was the same as the configuration of the single-cell battery of sample No. 1 to sample No. 12 except that the covered portion 172 was not included.

### <<Sample No. 102>>

In the single-cell battery of sample No. 102, the first cell frame 16, the positive electrode 14, the membrane 11, the negative electrode 15, and the second cell frame 16 were stacked in this order so as to be in contact with each other. The configuration of the single-cell battery of sample No. 102 was the same as the configuration of the single-cell battery of sample No. 1 to sample No. 13 except that the porous body 17 was not provided.

### <<Test of Battery Characteristics>>

A vanadium sulfate aqueous solution was used for each of the positive electrolyte and the negative electrolyte. The concentration of vanadium was 1.7 mol/L. The vanadium ions serve as active material ions. The charging and discharging test was performed at a constant current density of 70 mA/cm², and when the battery voltage reached a predetermined switching voltage, the charging and discharging were switched. In the test of the battery characteristics, charging and discharging were performed for 5 cycles.

Based on the data obtained from the test, the cell resistivity (Ω·cm²) and current efficiency (%) of each sample were obtained. The results are shown in Table 1. The cell resistivity was calculated by multiplying the cell resistance value by the area of the electrode 100. The cell resistance value is a value obtained by dividing a difference between intermediate voltage of charging and intermediate voltage of discharging by two, and further dividing the value by the current value. The term "intermediate voltage" means that a voltage value at a time point when half the time has elapsed from the start of charging or discharging to the end of the charging or discharging. The current efficiency is a ratio of the discharging time to the charging time in the fifth cycle. Specifically, the current efficiency is (total discharging time / total charging time) × 100.

**[Table 1]**

| SAMPLE NO. | LOCATION OF POROUS BODY | ION EXCHANGE MATERIAL | | CELL RESISTI -VITY (Ω cm²) | CURRENT EFFICIEN - CY (%) |
|---|---|---|---|---|---|
| | | TYPE | MATERIAL | | |
| **1** | BOTH ELECTRODES | pC-TYPE | poly(diallyldimethylammonium) | **0. 47** | **99** |
| **2** | BOTH ELECTRODES | pC-TYPE | poly(4-vinylpyridine) | **0. 48** | **99** |
| **3** | BOTH ELECTRODES | pC-TYPE | polyethylenimine | **0.50** | **99** |
| **4** | BOTH ELECTRODES | pC-TYPE | polyaniline | **0. 49** | **97** |
| **5** | BOTH ELECTRODES | pC-TYPE | polypyrrole | **0.51** | **97** |
| **6** | BOTH ELECTRODES | pC-TYPE + pA-TYPE | poly(diallyldimethylammonium) + poly(sodium 4-styrenesulfonate) | **0. 48** | **99** |
| **7** | BOTH ELECTRODES | pC-TYPE + pA-TYPE | poly(diallyldimethylammonium) + perfluorocarbonsulfonic acid resin | **0. 50** | **98** |
| **8** | BOTH ELECTRODES | pA-TYPE | sulfonated polyetheretherketone | **0. 51** | **96** |
| **9** | BOTH ELECTRODES | pA-TYPE | sulfonated polyimide | **0. 50** | **95** |
| **10** | BOTH ELECTRODES | pA-TYPE | poly(sodium 4-styrenesulfonate) | **0. 51** | **95** |
| **11** | BOTH ELECTRODES | pA-TYPE | sulfonated polyether sulfone | **0. 49** | **97** |
| **12** | BOTH ELECTRODES | pA-TYPE | sulfonated polybenzimidazole | **0. 51** | **96** |
| **13** | NEGATIVE ELECTRODE | pC-TYPE | poly(4-vinylpyridine) | **0.45** | **90** |
| **101** | BOTH ELECTRODES | | | **0.46** | **89** |
| **102** | NO POROUS BODY | | | **0.41** | **80** |

Sample No. 1 to sample No. 13 are compared with sample No. 101. The inclusion of the ion exchange material in the porous body improved the current efficiency. The current efficiencies of sample No. 1 to sample No. 3, sample No. 6, and sample No. 7 was 98% or more. In each of sample No. 1 to sample No. 3, just a specific anion exchange material was contained in the porous body. In sample No. 6 and sample No. 7, both the cation exchange material and the anion exchange material were contained in the porous bodies. Thus, it is inferred that the current efficiency was improved by the reduction in the amount of active material ions permeating through the membrane.

Sample No. 1 to sample No. 12 are compared with sample No. 102. Even when the porous bodies were respectively disposed in the positive electrode cell and the negative electrode cell, the increase in cell resistivity was 0.1 Ω·cm² or less. Since the porous body does not impede the flow of the electrolyte, it is inferred that the porous body does not significantly increase the cell resistivity.

The current efficiency of sample No. 13 was lower than the current efficiencies of sample No. 1 to sample No. 12. The reason for this is considered to be that, in sample No. 13, the porous body was not present between the positive electrode and the membrane, and thus, damage occurred in a part of the membrane. Although it is considered that a part of the membrane was damaged, the current efficiency of sample No. 13 was higher than the current efficiency of sample No. 101. Even when the porous body is disposed only in the negative electrode cell, it is inferred that the current efficiency is improved by thickening the membrane 11 or by forming the positive electrode 14 with a soft material. However, it is considered that the cell resistivity increases as the membrane becomes thicker.

### REFERENCE SIGNS LIST

1 RF battery system ( redox flow battery system )
10 battery cell
11 membrane
14 positive electrode
15 negative electrode
16 cell frame
161 bipolar plate
162 frame body
167 sealing member
17 porous body
171 base
171a resin fiber
172 covered portion
10P first circulation mechanism
10N second circulation mechanism
18 positive electrolyte tank
19 negative electrolyte tank
20, 21 supply pipe
22, 23 discharge pipe
24, 25 pump
100 electrode
111 fiber aggregate
111a carbon fiber
200 cell stack
220 end plate
230 fastening mechanism
500 alternating current/direct current converter
510 power generation unit
520 transformer facility
530 load

## Claims

1. A battery cell comprising:
a positive electrode;
a negative electrode;
a membrane; and
a porous body,
wherein the porous body is disposed between the positive electrode and the membrane, the porous body is disposed between the negative electrode and the membrane, or the porous bodies are respectively disposed between the positive electrode and the membrane and between the negative electrode and the membrane,
wherein the porous body includes a porous base made of an insulating material and a covered portion formed on at least a part of the base, and
wherein the covered portion includes at least one of a cation exchange material or an anion exchange material.

2. The battery cell according to claim 1,
wherein the porous bodies are respectively disposed between the positive electrode and the membrane and between the negative electrode and the membrane.

3. The battery cell according to claim 1,
wherein the porous body is disposed only between the negative electrode and the membrane.

4. The battery cell according to any one of claims 1 to 3,
wherein the anion exchange material is one or more materials selected from the group consisting of a material containing a primary to tertiary amino group, a material containing a quaternary ammonium group, and a material containing a heterocyclic molecule having nitrogen.

5. The battery cell according to any one of claims 1 to 4,
wherein the covered portion includes both the cation exchange material and the anion exchange material.

6. The battery cell according to any one of claims 1 to 4,
wherein the covered portion includes no cation exchange material and includes just the anion exchange material.

7. The battery cell according to any one of claims 1 to 5,
wherein the cation exchange material is one or more materials selected from the group consisting of a material containing a sulfonic acid group, a material containing a carboxylic acid group, and a material containing a phosphoric acid group.

8. The battery cell according to any one of claims 1 to 7,
wherein at least one of the cation exchange material or the anion exchange material includes a hydrocarbon-based ion exchange material.

9. The battery cell according to any one of claims 1 to 8,
wherein the insulating material is polyethylene, polypropylene, an ethylene-α-olefin copolymer, a vinyl copolymer resin, an engineering plastic, a super engineering resin, or a halogen-containing resin.

10. The battery cell according to any one of claims 1 to 9,
wherein the membrane has a thickness of 60 µm or less.

11. The battery cell according to claim 10,
wherein the membrane has a thickness of 5 µm or more.

12. The battery cell according to any one of claims 1 to 11,
wherein the base includes a plurality of resin fibers, and
wherein the resin fibers have an average diameter of 0.1 µm to 20 µm.

13. The battery cell according to any one of claims 1 to 12,
wherein a porosity of the base is 60% to 99%.

14. The battery cell according to any one of claims 1 to 13,
wherein a basis weight of the base is 2 g/m² to 40 g/m².

15. The battery cell according to any one of claims 1 to 14,
wherein the porous body has a thickness of 0.5 µm to 200 µm.

16. The battery cell according to any one of claims 1 to 15,
wherein at least one of the positive electrode or the negative electrode is a fiber aggregate having a plurality of carbon fibers, and
wherein the fiber aggregate is a nonwoven fabric, a woven fabric, or a paper.

17. A redox flow battery system comprising:
the battery cell according to any one of claims 1 to 16,
a first circulation mechanism configured to circulate a positive electrolyte through the battery cell; and
a second circulation mechanism configured to circulate a negative electrolyte through the battery cell,
wherein the positive electrolyte contains vanadium ions as positive active materials, and
wherein the negative electrolyte contains vanadium ions as negative active materials.
